# EUROPEAN PATENT APPLICATION

(11) **EP 4 438 569 A1**
(43) Date of publication of application: **02.10.2024**
(21) Application number: 22895640.5
(22) Date of filing: 16.11.2022
(51) Int. Cl.: C03B 37/012

(54) **ROD INSERTION JIG AND METHOD FOR PRODUCING MULTICORE OPTICAL FIBER BASE MATERIAL**

(30) Priority: 22.11.2021 JP 2021189293
(71) Applicant: SUMITOMO ELECTRIC INDUSTRIES, LTD., Osaka-shi, Osaka 541-0041 (JP)
(72) Inventor: SUGANUMA, Takahiro, Osaka-shi, Osaka 541-0041 (JP); HASEGAWA, Takemi, Osaka-shi, Osaka 541-0041 (JP); MOTOFUJI, Tooru, Osaka-shi, Osaka 541-0041 (JP)
(74) Representative: Müller-Boré & Partner Patentanwälte PartG mbB
(86) International application number: PCT/JP2022/042548
(87) International publication number: WO 2023/090359

(57) **Abstract**

A rod insertion jig inserts a glass rod into a hole penetrating a cladding preform. The cladding preform has a first hole. A first glass pipe is connected to a first end of the cladding preform. A second glass pipe is connected to a second end of the cladding preform. The first glass rod that is the glass rod inserted into the first hole is a rod-shaped member of which an axial direction is a first direction. The rod insertion jig includes a support portion installed in contact with an inner surface of the first glass pipe, a first holding portion supported by the support portion inside the first glass pipe, and a first moving portion that is a member for moving the first glass rod. The first holding portion has a first mounting surface on which the first glass rod is mounted along the first direction. The support portion supports the first holding portion such that the first glass rod mounted on the first mounting surface entirely overlaps the first hole as viewed from the first direction. The first moving portion moves the first glass rod mounted on the first mounting surface in the first direction.

## Description

### Technical Field

The present disclosure relates to a rod insertion jig and a method for producing a multicore optical fiber preform. The present disclosure relates to an optical fiber and a method for producing an optical fiber. The present application claims priority to Japanese Patent Application No. 2021-189293 filed on November 22, 2021, and the entire contents of the Japanese patent application are incorporated herein by reference.

### Background Art

Patent Literature 1 discloses a method for producing a multicore optical fiber (hereinafter, an MCF) preform including a step of inserting a plurality of core materials into a plurality of holes provided in a cladding material, a step of inserting a frame into glass pipes connected to both ends of the cladding material and fixing the core material by sandwiching the core material with the frame, and a step of heating and integrating the core material and the cladding material.

### Citation List

### Patent Literature

Patent Literature 1: JP 2011-168464 A

### Summary of Invention

In a rod insertion jig according to an aspect of the present disclosure, a glass rod is inserted into a hole penetrating a cladding preform. The cladding preform is a columnar member having a first end and a second end facing each other, and has a first hole that is the hole penetrating from the first end to the second end along a central axis of the cladding preform at a position deviated from the central axis in a section perpendicular to the central axis. A first glass pipe is connected to the first end of the cladding preform. A second glass pipe is connected to the second end of the cladding preform. The first glass rod that is the glass rod inserted into the first hole is a rod-shaped member of which an axial direction is a first direction. The rod insertion jig includes a support portion installed in contact with an inner surface of the first glass pipe, a first holding portion supported by the support portion inside the first glass pipe, and a first moving portion that is a member for moving the first glass rod. The first holding portion has a first mounting surface on which the first glass rod is mounted along the first direction. The support portion supports the first holding portion such that the first glass rod mounted on the first mounting surface entirely overlaps the first hole as viewed from the first direction. The first moving portion moves the first glass rod mounted on the first mounting surface in the first direction.

### Brief Description of Drawings

FIG. 1 is a sectional view of an MCF preform produced by using a rod insertion jig according to an embodiment.
FIG. 2 is a flowchart illustrating a method for producing the MCF preform according to the embodiment.
FIG. 3 is a perspective view of a cladding preform to which a glass pipe is connected.
FIG. 4 is a sectional view of the cladding preform.
FIG. 5 is a sectional view for describing an insertion step.
FIG. 6 is a perspective view illustrating the rod insertion jig according to the embodiment.
FIG. 7 is a sectional view taken along line VII-VII of FIG. 5.
FIG. 8 is a sectional view for describing an integration step.
FIG. 9 is a sectional view for describing an insertion step by using a rod insertion jig according to a first variation.
FIG. 10 is a sectional view for describing an insertion step by using a rod insertion jig according to a second variation.

### Description of Embodiments

### [Problems to be Solved by Present Disclosure]

Since the glass pipes are connected to both the ends of the cladding preform, the core material is typically inserted into a hole having a diameter of about 10 mm located about 1000 mm ahead. In addition, since the hole is not located on the central axis of the cladding material, it is not easy to insert the core material. Even though the core material can be inserted, when an insertion direction deviates from an axial direction of the hole, the core material and an inner wall of the hole are scratched by friction. Such scratches become bubbles in the optical fiber, and there is a possibility that a yield is reduced.

Although it is conceivable to cut the glass pipe at the time of inserting the core material, there is a possibility that foreign matters intrude into the hole of the cladding preform by cutting and reconnecting the glass pipe. There is a possibility that such foreign matters adversely affect the optical fiber such as a decrease in strength and deterioration in characteristics of propagation light.

An object of the present disclosure is to provide a rod insertion jig and a method for producing an MCF preform capable of inserting a glass rod into a hole of a cladding preform while suppressing scratches and the intrusion of foreign matters.

### [Effects of Present Disclosure]

According to the present disclosure, it is possible to provide a rod insertion jig and a method for producing an MCF preform capable of inserting a glass rod into a hole of a cladding preform while suppressing scratches and the intrusion of foreign matters.

### [Description of Embodiments of Present Disclosure]

Embodiments of the present disclosure are first listed and described. In a rod insertion jig according to an aspect of the present disclosure, a glass rod is inserted into a hole penetrating a cladding preform. The cladding preform is a columnar member having a first end and a second end facing each other, and has a first hole that is the hole penetrating from the first end to the second end along a central axis of the cladding preform at a position deviated from the central axis in a section perpendicular to the central axis. A first glass pipe is connected to the first end of the cladding preform. A second glass pipe is connected to the second end of the cladding preform. The first glass rod that is the glass rod inserted into the first hole is a rod-shaped member of which an axial direction is a first direction. The rod insertion jig includes a support portion installed in contact with an inner surface of the first glass pipe, a first holding portion supported by the support portion inside the first glass pipe, and a first moving portion that is a member for moving the first glass rod. The first holding portion has a first mounting surface on which the first glass rod is mounted along the first direction. The support portion supports the first holding portion such that the first glass rod mounted on the first mounting surface entirely overlaps the first hole as viewed from the first direction. The first moving portion moves the first glass rod mounted on the first mounting surface in the first direction.

In the rod insertion jig, since the first glass rod is held by the first holding portion and is inserted into the first glass pipe, the first glass rod can be transported to the vicinity of the cladding preform without cutting the first glass pipe. Accordingly, it is possible to insert the first glass rod into the first hole while suppressing intrusion of foreign matters due to cutting and reconnecting of the first glass pipe. The first glass rod is mounted on the first mounting surface of the first holding portion, and is guided in the first direction by the first mounting surface. Accordingly, the first moving portion can move the first glass rod in the first direction along the first mounting surface. According to the support portion, the insertion position and the insertion direction of the first glass rod with respect to the first hole can be appropriately adjusted. Accordingly, it is possible to insert the first glass rod into the first hole while suppressing generation of scratches on the first glass rod and the inner wall of the first hole.

The cladding preform may further include a second hole that is the hole different from the first hole. A second glass rod that is the glass rod inserted into the second hole may be a rod-shaped member of which an axial direction is a second direction. The rod insertion jig may further include a second holding portion supported by the support portion inside the first glass pipe, and a second moving portion which is a member for moving the second glass rod. The second holding portion may have a second mounting surface on which the second glass rod is mounted along the second direction. The support portion may support the second holding portion such that the second glass rod mounted on the second mounting surface entirely overlaps the second hole as viewed from the second direction. The second moving portion may move the second glass rod mounted on the second mounting surface in the second direction. In this case, since the second glass rod is held by the second holding portion and is inserted into the first glass pipe, the second glass rod can be disposed near the cladding preform without cutting the first glass pipe. Accordingly, it is possible to insert the second glass rod into the second hole while suppressing intrusion of foreign matters due to cutting and reconnecting of the first glass pipe. The second glass rod is mounted on the second mounting surface of the second holding portion and is guided in the second direction by the second mounting surface. Accordingly, the second moving portion can move the second glass rod in the second direction along the second mounting surface. According to the support portion, the insertion position and the insertion direction of the second glass rod with respect to the second hole can be appropriately adjusted. Accordingly, it is possible to insert the second glass rod into the second hole while suppressing generation of scratches on the second glass rod and the inner wall of the second hole. In addition, since the first glass rod and the second glass rod can be simultaneously inserted, a production time can be shortened.

The second moving portion may be the same member as the first moving portion. In this case, the first glass rod and the second glass rod can be sequentially moved.

The second moving portion may be a member different from the first moving portion. In this case, the first glass rod and the second glass rod can be moved simultaneously.

The support portion may include a first support member and a second support member spaced apart from each other in a longitudinal direction of the first holding portion. In this case, the first holding portion can be stably supported.

The first mounting surface may be a curved surface along an outer peripheral surface of the glass rod as viewed from a longitudinal direction of the first holding portion. In this case, it is easy to guide the first glass rod in the first direction.

A length of the first holding portion in a longitudinal direction may be longer than a length of the first glass pipe in a longitudinal direction. In this case, the first glass rod is easily inserted into the first hole.

A length of the first moving portion in a longitudinal direction may be longer than a length of the first holding portion in a longitudinal direction. In this case, the first moving portion can apply a pushing force to the first glass rod from one end to the other end of the first holding portion.

The first holding portion may be disposed such that a distal end of the first holding portion is spaced apart from the first end of the cladding preform. In this case, it is possible to suppress scratches and the intrusion of foreign matters.

A method for producing an MCF preform according to another aspect of the present disclosure includes preparing a cladding preform having a first end connected to a first glass pipe and a hole penetrating in a direction along a central axis at a position deviated from the central axis, preparing a glass rod, inserting the glass rod into the hole by using the rod insertion jig, and integrating the cladding perform and the glass rod inserted into the hole.

In the method for producing an MCF preform, since the rod insertion jig is used, it is possible to insert the glass rod into the hole of the cladding preform while suppressing scratches and the intrusion of foreign matters.

### [Details of Embodiments of Present Disclosure]

Specific examples of a rod insertion jig and a method for producing an MCF preform of the present disclosure will be described below with reference to the drawings. Note that, the present disclosure is not limited to these examples, but is indicated by the claims, and is intended to include all modifications within the meaning and scope equivalent to the claims. In the description of the drawings, the same elements are denoted by the same reference signs, and redundant description will be omitted.

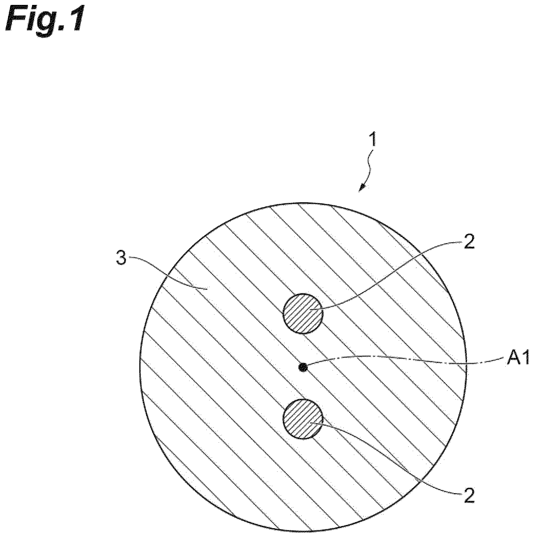

FIG. 1 is a sectional view of an MCF preform produced by using a rod insertion jig according to an embodiment. In this drawing, a section perpendicular to a central axis A1 of an MCF preform 1 is illustrated. MCF preform 1 includes a plurality of core portions 2 and a common cladding portion 3. In the present embodiment, the number of core portions 2 is two.

Core portion 2 extends along central axis A1. In the section, the plurality of core portions 2 are disposed at positions deviated from central axis A1 and point-symmetric with respect to central axis A1. Sectional shapes of the plurality of core portions 2 are the same circular shapes. Cladding portion 3 surrounds the plurality of core portions 2. A sectional shape of cladding portion 3 is a circular shape.

A refractive index of core portion 2 is higher than a refractive index of cladding portion 3. Core portion 2 and cladding portion 3 are made of a silica-based glass material. Each of core portion 2 and cladding portion 3 contains silica glass as a main component and contains a dopant for adjusting a refractive index.

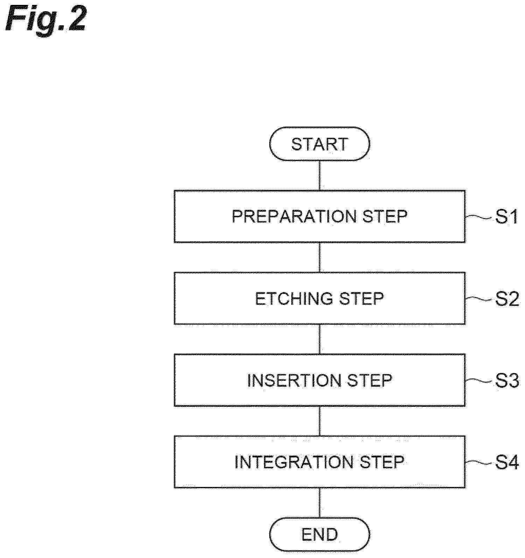

FIG. 2 is a flowchart illustrating the method for producing the MCF preform according to the embodiment. As illustrated in FIG. 2, the method for producing MCF preform 1 includes preparation step S1, etching step S2, insertion step S3, and integration step S4.

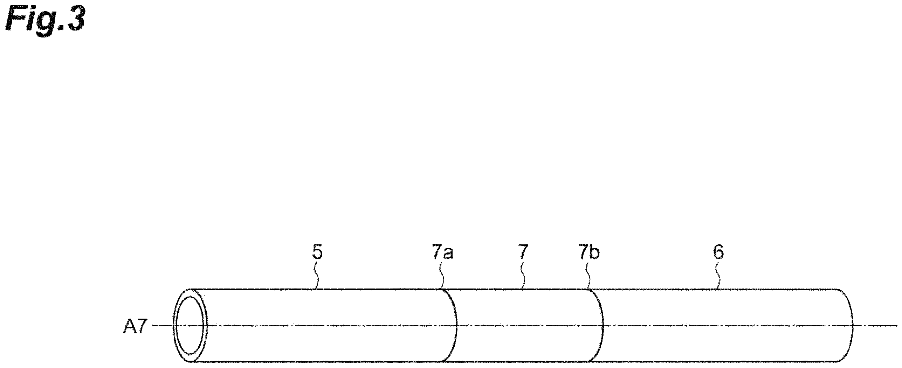

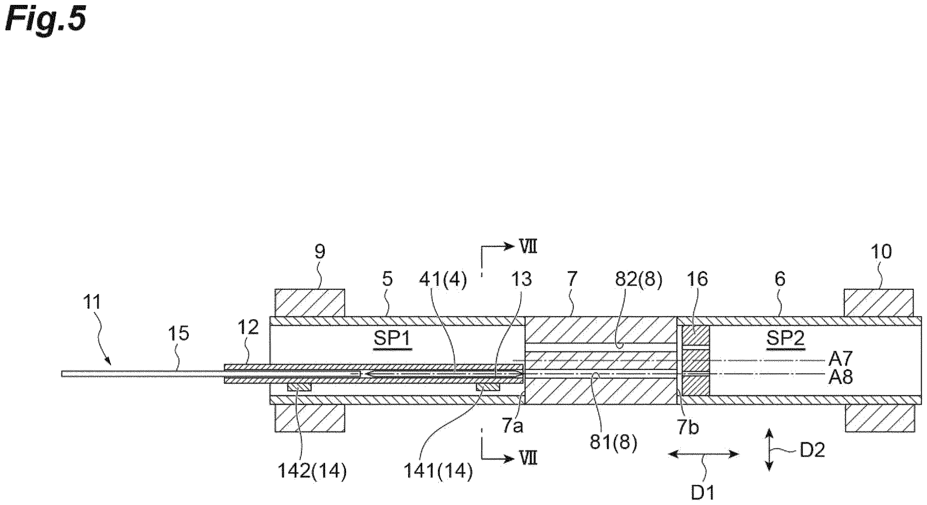

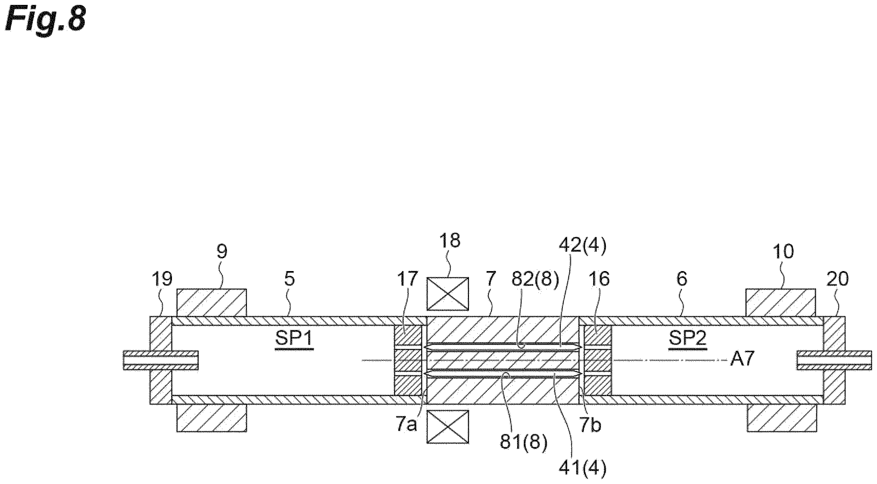

Preparation step S1 is a step of preparing a plurality of core rods 4 (see FIG. 5) and a cladding preform 7 (see FIG. 3) in which a first glass pipe 5 is connected to a first end 7a and a second glass pipe 6 is connected to a second end 7b. The preparation of the plurality of core rods 4 may be performed at least before insertion step S3. In the present embodiment, the plurality of core rods 4 include a first core rod 41 (see FIG. 5) and a second core rod 42 (see FIG. 8). First core rod 41 and second core rod 42 are collectively referred to as core rods 4. Cladding preform 7 to which first glass pipe 5 and second glass pipe 6 are connected is prepared before etching step S2.

Core rod 4 is a glass rod to become core portion 2 (see FIG. 1). The plurality of core rods 4 have the same shape. Core rod 4 has a cylindrical shape. A diameter of core rod 4 is, for example, from 9 mm to 15 mm or less. A length of core rod 4 in a longitudinal direction may be 400 mm or more, 800 mm or more, or 1200 mm or more. That is, core rod 4 may be a rod-shaped member having an axial direction. Accordingly, a length (fiber length) of an optical fiber that can be produced from one MCF preform 1 can be increased, and production cost per unit length of the optical fiber can be reduced.

FIG. 3 is a perspective view of the cladding preform to which the glass pipes are connected. Cladding preform 7 illustrated in FIG. 3 is a glass rod to become cladding portion 3 (see FIG. 1). Cladding preform 7 is a columnar member and has, for example, a cylindrical shape. A diameter of cladding preform 7 is, for example, from 40 mm to 120 mm. A length of cladding preform 7 in the longitudinal direction is equal to the length of core rod 4 in the longitudinal direction. Cladding preform 7 has first end 7a and second end 7b in the longitudinal direction as both ends thereof.

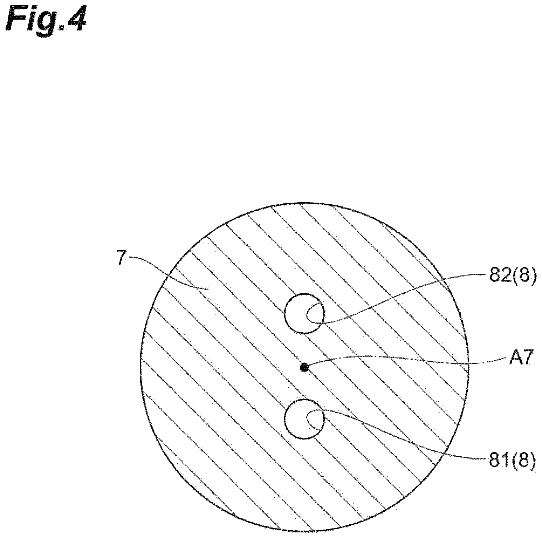

FIG. 4 is a sectional view of the cladding preform. In this drawing, a section perpendicular to a central axis A7 of cladding preform 7 is illustrated. As illustrated in FIG. 4, cladding preform 7 has been perforated. In cladding preform 7, a plurality of holes 8 penetrate along central axis A7 from first end 7a to second end 7b at positions deviated from central axis A7 of cladding preform 7. A central axis A8 (see FIG. 5) of each hole 8 is parallel to central axis A7. In the present embodiment, the plurality of holes 8 include a first hole 81 and a second hole 82. First hole 81 and second hole 82 are collectively referred to as holes 8. The plurality of core rods 4 are inserted into the plurality of holes 8. First core rod 41 is inserted into first hole 81. Second core rod 42 is inserted into second hole 82.

The disposition of the plurality of holes 8 in cladding preform 7 is similar to the disposition of the plurality of core portions 2 in cladding portion 3. That is, in the section, first hole 81 and second hole 82 are disposed at positions deviated from central axis A7 and at positions point-symmetrical to each other with respect to central axis A7. The plurality of holes 8 have the same shape. Hole 8 has a circular section. In the section, first hole 81 and second hole 82 are disposed in a direction orthogonal to central axis A7. A diameter of each hole 8 is about the same as or longer than the diameter of core rod 4, and is, for example, from 9 mm to 16 mm. Accordingly, a diameter of each hole 8 after etching step S2 is large enough to insert core rod 4.

As illustrated in FIG. 3, first glass pipe 5 is joined to first end 7a of cladding preform 7, and second glass pipe 6 is joined to second end 7b. First glass pipe 5 and second glass pipe 6 are dummy pipes. First glass pipe 5 and second glass pipe 6 have a circular pipe shape. Outer diameters of first glass pipe 5 and second glass pipe 6 are substantially equal to as or smaller than the diameter of cladding preform 7, and inner diameters are larger than the diameter of core rod 4. First glass pipe 5 and second glass pipe 6 are joined to be coaxial with cladding preform 7. That is, central axes of first glass pipe 5 and second glass pipe 6 coincide with central axis A7. The lengths of first glass pipe 5 and second glass pipe 6 are equal to each other, for example. The length of first glass pipe 5 is long enough such that heat generated from an external heat source in the etching step or the integration step does not significantly affect a gripping portion 9 (see FIG. 5). The length of first glass pipe 5 is, for example, from 1000 mm to 2000 mm. Thus, it is difficult to directly grip core rod 4 with a hand and insert the core rod into hole 8.

Etching step S2 is a step of etching inner surfaces of the plurality of holes 8 of cladding preform 7 for cleaning. In etching step S2, an etching reaction occurs by introducing an etching gas acting on glass from second glass pipe 6 into the plurality of holes 8 of cladding preform 7, discharging the etching gas from first glass pipe 5, and heating the etching gas by an external heat source (not illustrated). For example, an induction furnace, a resistance furnace, an oxyhydrogen burner, or the like is used as the external heat source. Accordingly, inner surface layers of the plurality of holes 8 are scraped to a certain extent, and removal of impurities present on inner surfaces and smoothing of the inner surface are performed.

In etching step S2, as the etching gas, for example, a toxic gas such as Cl₂ gas is used in addition to SF₆ gas and the like. Accordingly, it is necessary to perform etching step S2 in a closed system isolated from an external environment. Etching step S2 is performed by connecting a gas introduction portion (not illustrated) to second glass pipe 6 and connecting a gas discharge portion (not illustrated) to first glass pipe 5. One of reasons why the gas introduction portion and the gas discharge portion are not directly connected to cladding preform 7 is to maintain inner surface cleanliness of cladding preform 7. The other reason is that, in etching step S2 and integration step S4, it is necessary to heat a cladding preform effective portion at a high temperature, but it is difficult to prepare the gas introduction portion and the gas discharge portion that can withstand such a high temperature.

Insertion step S3 is a step of inserting the plurality of core rods 4 into the plurality of holes 8 of cladding preform 7 by using a rod insertion jig 11 (see FIG. 5). Insertion step S3 is performed after preparation step S1 and etching step S2.

FIG. 5 is a sectional view for describing the insertion step. As illustrated in FIG. 5, insertion step S3 is performed in a state where first glass pipe 5 and second glass pipe 6 are gripped by gripping portions 9 and 10 of a glass lathe such that central axis A7 of cladding preform 7 coincides with a horizontal direction. Specifically, first glass pipe 5 is gripped by gripping portion 9, and second glass pipe 6 is gripped by gripping portion 10.

First glass pipe 5 and second glass pipe 6 are gripped by gripping portions 9 and 10 to be rotatable about central axis A7. Gripping portions 9 and 10 rotate first glass pipe 5 and second glass pipe 6 such that one hole 8 among the plurality of holes 8 is disposed at a lowest position in a vertical direction D2, that is, a gravity direction. Here, among the plurality of holes 8, first hole 81 is disposed at the lowest position in vertical direction D2, and second hole 82 is disposed at a highest position in vertical direction D2. A direction in which first hole 81 and second hole 82 are aligned coincides with vertical direction D2.

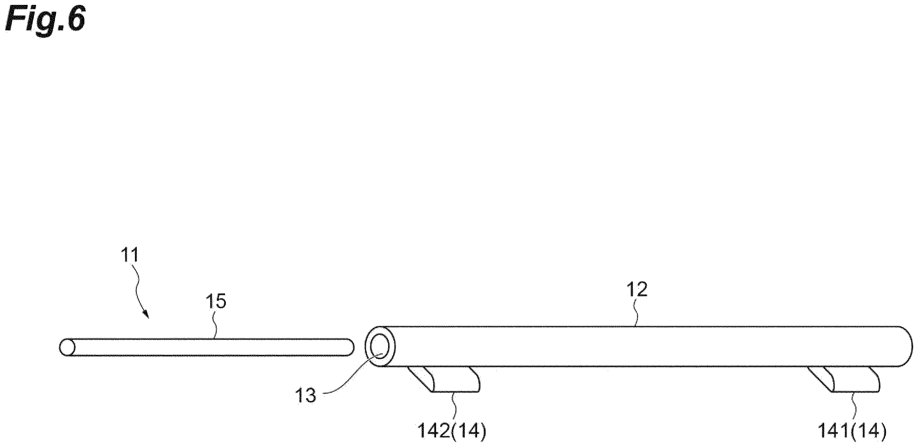

FIG. 6 is a perspective view illustrating the rod insertion jig according to the embodiment. As illustrated in FIGS. 5 and 6, rod insertion jig 11 includes a holding portion 12, a support portion 14, and a moving portion 15. In rod insertion jig 11, core rod 4 is inserted into hole 8 penetrating cladding preform 7 in which first glass pipe 5 and second glass pipe 6 are connected to both ends, along central axis A7 at a position deviated from central axis A7.

Holding portion 12 holds core rod 4 and is inserted into first glass pipe 5. Holding portion 12 is supported by support portion 14 inside first glass pipe 5. Holding portion 12 is made of, for example, a resin having heat resistance and chemical resistance such as a fluororesin. Holding portion 12 has a hollow shape. Holding portion 12 is a circular pipe. Holding portion 12 is formed to be capable of accommodating core rod 4 therein. Holding portion 12 has a mounting surface 13 on which core rod 4 is mounted along an axial direction D1 of core rod 4. It can be said that mounting surface 13 supports aside surface of core rod 4 in vertical direction D2.

Mounting surface 13 is configured to guide core rod 4 in axial direction D1 of core rod 4. Mounting surface 13 extends in the longitudinal direction of holding portion 12. Mounting surface 13 is configured to guide core rod 4 in an extending direction of mounting surface 13 of holding portion 12. Core rod 4 is mounted on mounting surface 13 such that axial direction D1 coincides with the extending direction of mounting surface 13. Accordingly, core rod 4 mounted on mounting surface 13 is guided along axial direction D1. Mounting surface 13 is a curved surface curved along an outer peripheral surface of core rod 4 as viewed from the longitudinal direction of holding portion 12.

A length of holding portion 12 in the longitudinal direction is longer than the length of first glass pipe 5. The length of holding portion 12 in the longitudinal direction may be 800 mm or more, 1200 mm or more, or 1600 mm or more. The length of first glass pipe 5 is increased, and thus, a length between a heating portion 18 (see FIG. 8) and gripping portion 9 can be increased. Accordingly, it is possible to suppress a thermal influence on gripping portion 9. Accordingly, heating capacity can be increased, a processing time can be shortened, and a production amount can be increased.

Support portion 14 is installed in contact with the inner surface of first glass pipe 5, and supports holding portion 12 in vertical direction D2. Support portion 14 may be fixed to holding portion 12. Support portion 14 includes a first support member 141 and a second support member 142 that are disposed to be spaced apart from each other in the longitudinal direction of holding portion 12. First support member 141 and second support member 142 are plate-shaped members having a predetermined thickness, and holding portion 12 is disposed on an upper surface thereof. First support member 141 and second support member 142 are made of, for example, a heat-resistant resin such as a fluororesin. First support member 141 and second support member 142 have, for example, the same shape.

Moving portion 15 moves core rod 4 by applying a pushing force in axial direction D1 to an end face of core rod 4 held by holding portion 12. Moving portion 15 is, for example, a rod-like member having a circular section. Moving portion 15 is made of, for example, a heat-resistant resin such as a fluororesin. A length of moving portion 15 in the longitudinal direction is longer than the length of holding portion 12 in the longitudinal direction. Accordingly, moving portion 15 can apply a pushing force to core rod 4 from one end to the other end of holding portion 12.

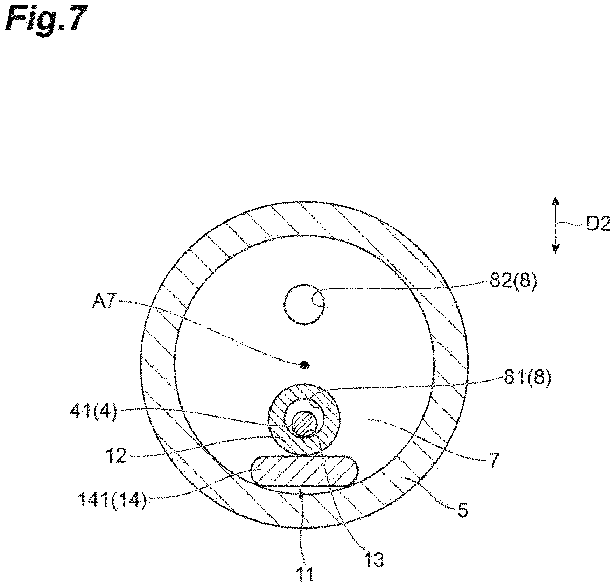

FIG. 7 is a sectional view taken along line VII-VII of FIG. 5. As illustrated in FIGS. 5 and 7, in insertion step S3, first, holding portion 12 holding core rod 4 in rod insertion jig 11 is disposed in an internal space SP1 of first glass pipe 5 together with support portion 14. Accordingly, core rod 4 is disposed in internal space SP1. A distal end of holding portion 12 faces first end 7a of cladding preform 7 and is disposed to be spaced apart from first end 7a not to come into contact with first end 7a.

Support portion 14 is disposed to be in contact with the inner surface of first glass pipe 5. Support portion 14 is disposed such that a thickness direction thereof coincides with vertical direction D2. Support portion 14 is configured to be able to adjust an insertion position and an insertion direction of core rod 4 with respect to hole 8. Support portion 14 supports holding portion 12 such that axial direction D1 of core rod 4 is parallel to central axis A7 and entire core rod 4 mounted on mounting surface 13 overlaps hole 8 as viewed from a direction along central axis A7.

A height position of core rod 4 is set by, for example, a thickness of support portion 14. A thickness T of support portion 14 is selected such that T = H - {R - (R² - {W/2}²)^{1/2} + C} where W represents a width of support portion 14, R represents an inner radius of first glass pipe 5, H represents a distance from the inner surface of first glass pipe 5 to a center of hole 8, and C represents a distance from a bottom surface of holding portion 12 to a center of core rod 4. However, width W is defined as a minimum width including all inscribed points of support portion 14 on the inner surface of first glass pipe 5 in the horizontal direction perpendicular to vertical direction D2 in the section of FIG. 7. As a result, core rod 4 (here, first core rod 41) held by holding portion 12 and disposed on an upper surface of support portion 14 is positioned substantially coaxially with hole 8 (here, first hole 81) disposed at the lowest position in vertical direction D2 among the plurality of holes 8. Support portion 14 is fixed to holding portion 12 such that the longitudinal direction of holding portion 12 is parallel to central axis A7 when the support portion is disposed in internal space SP1 of first glass pipe 5. Accordingly, axial direction D1 of core rod 4 becomes parallel to central axis A7.

On the other hand, an abutment portion 16 against which a distal end of core rod 4 is abutted is disposed in an internal space SP2 of second glass pipe 6. Abutment portion 16 faces second end 7b of cladding preform 7 and is disposed to be spaced apart from second end 7b not to come into contact with second end 7b. Abutment portion 16 is made of, for example, glass. Abutment portion 16 functions as a stopper that restrains the movement of core rod 4 in axial direction D1. A vent hole having such a size that core rod 4 cannot pass therethrough is provided in abutment portion 16.

Subsequently, a force in axial direction D1 is applied to core rod 4 held by holding portion 12 by moving portion 15. Core rod 4 is guided in axial direction D1 along mounting surface 13 of holding portion 12. Core rod 4 moves in axial direction D1 until hitting abutment portion 16, and is pushed into hole 8. Accordingly, core rod 4 is inserted into hole 8.

Subsequently, after rod insertion jig 11 is taken out of first glass pipe 5, first glass pipe 5 and second glass pipe 6 are rotated by 180 degrees by gripping portions 9 and 10. Accordingly, among the plurality of holes 8, the other hole 8 (here, second hole 82) into which core rod 4 is not inserted is disposed at the lowest position in vertical direction D2. Thereafter, similarly to the insertion of first core rod 41, second core rod 42 is inserted into second hole 82 by using rod insertion jig 11. In the present embodiment, the number of holes 8 is two, but in a case where the number of holes is three or more, each core rod 4 is similarly inserted into hole 8 by using rod insertion jig 11. After all core rods 4 to be inserted are inserted, an abutment portion 17 is inserted into first glass pipe 5 to abut on inserted core rod 4. According to abutment portion 17, core rod 4 is prevent from being dismounted to the inside of first glass pipe 5.

Integration step S4 is a step of heating and melting cladding preform 7 and the plurality of core rods 4 inserted into the plurality of holes 8 of cladding preform 7 to integrate the cladding preform and the plurality of core rods. Integration step S4 is performed after insertion step S3.

FIG. 8 is a sectional view for describing the integration step. As illustrated in FIG. 8, in integration step S4, cladding preform 7 and core rod 4 are heated by heating portion 18. Heating portion 18 is disposed, for example, to surround cladding preform 7 in a circumferential direction. Integration step S4 is performed, for example, while cladding preform 7 is rotated by gripping portions 9 and 10. According to the integration step, cladding preform 7 and core rod 4 can be uniformly heated.

In integration step S4, the movement of core rod 4 along central axis A7 is restricted by abutment portions 16 and 17. Abutment portion 16 is disposed in internal space SP2 as described above. Abutment portion 17 is disposed in internal space SP1. Abutment portion 17 faces first end 7a of cladding preform 7 and is disposed to be spaced apart from first end 7a not to come into contact with first end 7a. Abutment portions 16 and 17 are disposed to sandwich cladding preform 7 in the direction (horizontal direction) along central axis A7.

Integration step S4 is performed while pressures in the plurality of holes 8 are reduced by pressure adjustment portions 19 and 20. Pressure adjustment portion 19 is connected to first glass pipe 5. Pressure adjustment portion 20 is connected to second glass pipe 6. Accordingly, hole 8 contracts, and cladding preform 7 is integrated with core rod 4. Heating portion 18 integrates cladding preform 7 and core rod 4 over the entire length while moving along central axis A7. As a result, MCF preform 1 is produced.

As described above, in rod insertion jig 11, since core rod 4 is held by holding portion 12 and is inserted into first glass pipe 5, core rod 4 can be transported to the vicinity of cladding preform 7 without cutting first glass pipe 5. Accordingly, it is possible to insert core rod 4 into hole 8 while suppressing intrusion of foreign matters due to cutting and reconnecting of first glass pipe 5. Core rod 4 is mounted on mounting surface 13 of holding portion 12 and is guided in axial direction D1 by mounting surface 13. Accordingly, moving portion 15 can move core rod 4 in axial direction D1 along mounting surface 13. According to support portion 14, an insertion position and an insertion direction of core rod 4 with respect to hole 8 can be appropriately adjusted. Accordingly, it is possible to insert core rod 4 into hole 8 while suppressing generation of scratches on inner walls of core rod 4 and hole 8.

In the method for producing MCF preform 1 according to the present embodiment, since rod insertion jig 11 is used, core rod 4 can be inserted into hole 8 while suppressing scratches and the intrusion of foreign matters.

Support portion 14 includes first support member 141 and second support member 142 that are spaced apart from each other in the longitudinal direction of holding portion 12. Thus, holding portion 12 can be stably supported.

Mounting surface 13 is a curved surface curved along an outer peripheral surface of core rod 4 as viewed from the longitudinal direction of holding portion 12. Thus, core rod 4 is mounted on mounting surface 13 such that axial direction D1 coincides with the extending direction of mounting surface 13. Accordingly, it is easy to guide core rod 4 in axial direction D1.

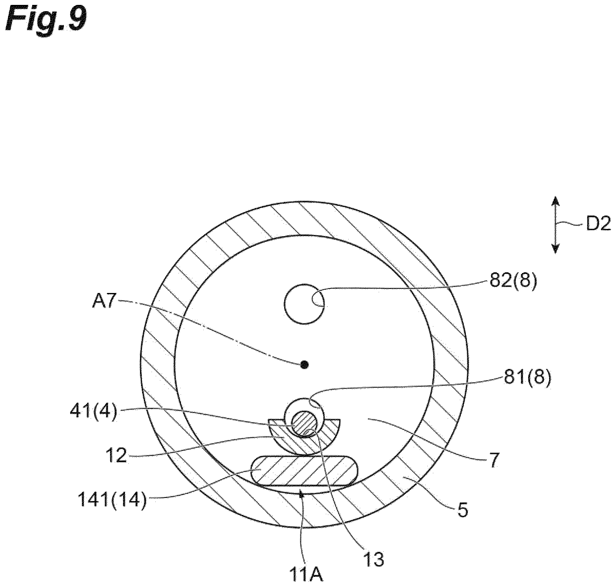

FIG. 9 is a sectional view for describing an insertion step by using a rod insertion jig according to a first variation. As illustrated in FIG. 9, a rod insertion jig 11A according to the first variation is different from rod insertion jig 11 (see FIG. 7) in the shape of holding portion 12. Holding portion 12 of rod insertion jig 11A is not a circular pipe but a groove-shaped member having a U-shaped section with an upper portion opened. Holding portion 12 of the present variation is formed as a half pipe obtained by dividing a circular pipe in half.

In rod insertion jig 11A, holding portion 12 also holds core rod 4 and is inserted into first glass pipe 5. In addition, holding portion 12 has mounting surface 13 on which core rod 4 is mounted, and mounting surface 13 guides core rod 4 in axial direction D1. Accordingly, core rod 4 can also be inserted into hole 8 by rod insertion jig 11A while suppressing scratches and the intrusion of foreign matters. According to rod insertion jig 11A, a weight of holding portion 12 can be reduced. Accordingly, operability of rod insertion jig 11A is improved, and core rod 4 is easily inserted into hole 8.

In rod insertion jig 11A, holding portion 12 has a shape in which the upper portion is opened in the entire longitudinal direction, but may have a shape in which the upper portion is opened only in a partial section in the longitudinal direction. In this case, the weight of holding portion 12 can also be reduced as compared with holding portion 12 having a circular pipe in the entire longitudinal direction. Accordingly, core rod 4 can be easily inserted into hole 8.

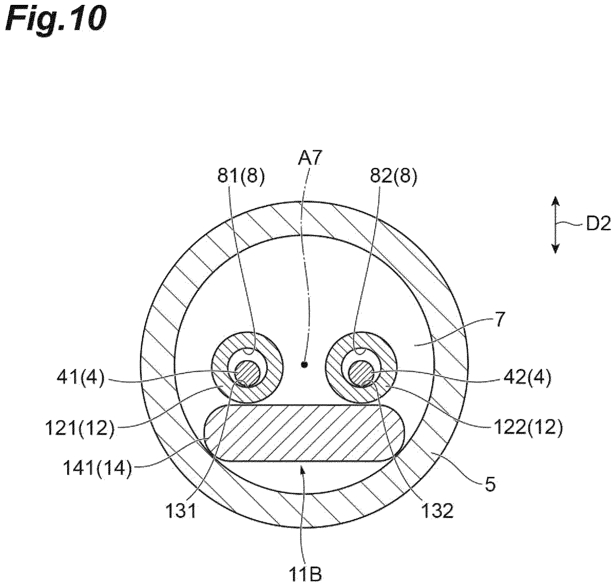

FIG. 10 is a sectional view for describing an insertion step by using a rod insertion jig according to a second variation. A rod insertion jig 11B according to the second variation illustrated in FIG. 10 is different from rod insertion jig 11 (see FIG. 7) in including a plurality of holding portions 12 and a plurality of moving portions 15 (see FIG. 5). The plurality of holding portions 12 include a first holding portion 121 that holds first core rod 41 and a second holding portion 122 that holds second core rod 42. First holding portion 121 and second holding portion 122 have the same configuration as holding portion 12 of rod insertion jig 11.

First holding portion 121 has first mounting surface 131 on which first core rod 41 is mount and which guides first core rod 41 in the axial direction of first core rod 41. Second holding portion 122 has a second mounting surface 132 on which second core rod 42 is mounted and which guides second core rod 42 in the axial direction of second core rod 42. First mounting surface 131 and second mounting surface 132 have the same configuration as mounting surface 13 of rod insertion jig 11.

The plurality of moving portions 15 includes a first moving portion and a second moving portion. The first moving portion and the second moving portion have the same configuration as moving portion 15 of rod insertion jig 11. The first moving portion applies a force to first core rod 41 held by first holding portion 121 to move first core rod 41. The second moving portion applies a force to second core rod 42 held by second holding portion 122 to move second core rod 42. The second moving portion is a member different from the first moving portion.

Support portion 14 is installed in contact with the inner surface of first glass pipe 5, and supports first holding portion 121 and second holding portion 122. First holding portion 121 and second holding portion 122 are supported by support portion 14 such that the longitudinal directions thereof are parallel to each other. The axial direction of first core rod 41 held by first holding portion 121 and the axial direction of second core rod 42 held by second holding portion 122 are parallel to each other.

In a method for producing MCF preform 1 according to the second variation, in insertion step S3, gripping portions 9 and 10 rotate first glass pipe 5 and second glass pipe 6 such that first hole 81 and second hole 82 are aligned not in vertical direction D2 but in the horizontal direction. Support portion 14 supports first holding portion 121 such that the axial direction of first core rod 41 is parallel to central axis A7 and entire first core rod 41 overlaps first hole 81 as viewed from the direction along central axis A7. In addition, support portion 14 supports second holding portion 122 such that the axial direction of second core rod 42 is parallel to central axis A7 and entire second core rod 42 overlaps second hole 82 as viewed from the direction along central axis A7. According to rod insertion jig 11B, since the insertion of first core rod 41 into first hole 81 and the insertion of second core rod 42 into second hole 82 can be simultaneously performed, a production time can be shortened.

Although the embodiment has been described above, the present disclosure is not necessarily limited to the above-described embodiment and variations, and various modifications can be made without departing from the scope of the present disclosure.

For example, rod insertion jigs 11, 11A, and 11B may be used for inserting glass rods other than core rod 4. Examples of the glass rod other than core rod 4 include a glass rod to become a low refractive index portion and a core position marker.

In rod insertion jig 11B, the number of moving portions 15 may be one. That is, the second moving portion is the same member as the first moving portion. In this case, first core rod 41 and second core rod 42 can also be sequentially moved by one moving portion 15.

In insertion step S3, central axis A7 of cladding preform 7 may not necessarily coincide with the horizontal direction. Support portion 14 supports holding portion 12 such that axial direction D1 of core rod 4 is parallel to central axis A7. Thus, when central axis A7 is greatly inclined with respect to the horizontal direction, there is a possibility that core rod 4 slides down from mounting surface 13 due to gravity, but central axis A7 may be inclined with respect to the horizontal direction as long as the central axis does not slide down.

Mounting surface 13 may have a V-shape as viewed from the longitudinal direction of holding portion 12. In this case, core rod 4 is also mounted on mounting surface 13 such that axial direction D1 coincides with the extending direction of mounting surface 13. Accordingly, core rod 4 can be guided in axial direction D1 by mounting surface 13.

The above-described embodiment and variations may be appropriately combined.

As understood from the description of the above-described embodiment and variations, the present specification includes disclosure of the following aspects.

### (Appendix 1)

A rod insertion jig configured to insert a glass rod into a hole penetrating a cladding preform in parallel along a central axis of the cladding preform at a position deviated from the central axis in a section perpendicular to the central axis, the cladding preform having a first end connected to a first glass pipe and a second end different from the first end and connected to a second glass pipe. The rod insertion jig includes a first holding portion that holds a first glass rod of which an axial direction is a first direction, and is inserted into the first glass pipe, a support portion that is installed in contact with an inner surface of the first glass pipe to support the first holding portion, and a first moving portion that applies a force in the first direction to the first glass rod held by the first holding portion to move the first glass rod. The first holding portion has a first mounting surface on which the first glass rod is mounted and which extends in the first direction, and the support portion supports the first holding portion such that the first direction is parallel to the central axis and the entire first glass rod overlaps the first hole that is the hole as viewed from the direction along the central axis.

### (Appendix 2)

The rod insertion jig according to Appendix 1 further includes a second holding portion that holds a second glass rod of which an axial direction is a second direction and is inserted into the first glass pipe, and a second moving portion that applies a force to the second glass rod held by the second holding portion to move the second glass rod. The second holding portion has a second mounting surface on which the second glass rod is mounted and which extends in the second direction, and the support portion supports the second holding portion such that the second direction is parallel to the central axis and the entire second glass rod overlaps the second hole that is the hole different from the first hole as viewed from the direction along the central axis.

### Reference Signs List

- 1: multicore optical fiber
- 2: core portion
- 3: cladding portion
- 4: core rod
- 5: first glass pipe
- 6: second glass pipe
- 7: cladding preform
- 7a: first end
- 7b: second end
- 8: hole
- 9: gripping portion
- 10: gripping portion
- 11: rod insertion jig
- 11A: rod insertion jig
- 11B: rod insertion jig
- 12: holding portion
- 13: mounting surface
- 14: support portion
- 15: moving portion (first moving portion, second moving portion)
- 16: abutment portion
- 17: abutment portion
- 18: heating portion
- 19: pressure adjustment portion
- 20: pressure adjustment portion
- 41: first core rod (first glass rod)
- 42: second core rod (second glass rod)
- 81: first hole
- 82: second hole
- 121: first holding portion
- 122: second holding portion
- 131: first mounting surface
- 132: second mounting surface
- 141: first support member
- 142: second support member
- A1: central axis
- A7: central axis
- D1: axial direction
- D2: vertical direction
- SP1: internal space
- SP2: internal space

## Claims

1. A rod insertion jig configured to insert a glass rod into a hole penetrating a cladding preform, wherein
the cladding preform is a columnar member having a first end and a second end facing each other, and includes a first hole that is the hole penetrating along a central axis of the cladding preform from the first end to the second end at a position deviated from the central axis in a section perpendicular to the central axis,
a first glass pipe is connected to the first end of the cladding preform,
a second glass pipe is connected to the second end of the cladding preform,
a first glass rod that is the glass rod inserted into the first hole is a rod-shaped member of which an axial direction is a first direction,
the rod insertion jig includes
a support portion that is installed in contact with an inner surface of the first glass pipe,
a first holding portion that is supported by the support portion inside the first glass pipe, and
a first moving portion that is a member for moving the first glass rod,
the first holding portion has a first mounting surface on which the first glass rod is mounted along the first direction,
the support portion supports the first holding portion such that the first glass rod mounted on the first mounting surface entirely overlaps the first hole as viewed from the first direction, and
the first moving portion moves the first glass rod mounted on the first mounting surface in the first direction.

2. The rod insertion jig according to claim 1, wherein
the cladding preform further includes a second hole that is the hole different from the first hole,
a second glass rod that is the glass rod inserted into the second hole is a rod-shaped member of which an axial direction is a second direction,
the rod insertion jig further includes
a second holding portion that is supported by the support portion inside the first glass pipe, and
a second moving portion that is a member for moving the second glass rod,
the second holding portion has a second mounting surface on which the second glass rod is mounted along the second direction,
the support portion supports the second holding portion such that the second glass rod mounted on the second mounting surface entirely overlaps the second hole as viewed from the second direction, and
the second moving portion moves the second glass rod mounted on the second mounting surface in the second direction.

3. The rod insertion jig according to claim 2, wherein
the second moving portion is the same member as the first moving portion.

4. The rod insertion jig according to claim 2, wherein
the second moving portion is a member different from the first moving portion.

5. The rod insertion jig according to any one of claims 1 to 4, wherein
the support portion includes a first support member and a second support member spaced apart from each other in a longitudinal direction of the first holding portion.

6. The rod insertion jig according to any one of claims 1 to 5, wherein
the first mounting surface is a curved surface along an outer peripheral surface of the first glass rod as viewed from a longitudinal direction of the first holding portion.

7. The rod insertion jig according to any one of claims 1 to 6, wherein
a length of the first holding portion in a longitudinal direction is longer than a length of the first glass pipe in a longitudinal direction.

8. The rod insertion jig according to any one of claims 1 to 7, wherein
a length of the first moving portion in a longitudinal direction is longer than a length of the first holding portion in a longitudinal direction.

9. The rod insertion jig according to any one of claims 1 to 8, wherein
the first holding portion is disposed such that a distal end of the first holding portion is spaced apart from the first end of the cladding preform.

10. A method for producing a multicore optical fiber preform, comprising:
preparing a cladding preform having a first end connected to a first glass pipe and a hole penetrating in a direction along a central axis at a position deviated from the central axis;
preparing a glass rod;
inserting the glass rod into the hole by using the rod insertion jig according to any one of claims 1 to 9; and
integrating the cladding perform and the glass rod inserted into the hole.
